# FASCICULE DE BREVET EUROPEEN

(11) **EP 1 311 024 B1**
(45) Date de publication et mention de la délivrance du brevet: **21.07.2004**
(21) Numéro de dépôt: 02292785.9
(22) Date de dépôt: 07.11.2002
(51) Int. Cl.: H01R 9/24

(54) **Peigne et procédé de derivation d'un cablage preexistant**
Kamm und Verfahren zur Abzweigung für eine bestehende Leitung
Comb and method of making a branch junction for a pre-existing wiring

(30) Priorité: 13.11.2001 FR 0114677
(43) Date de publication de la demande: 14.05.2003
(73) Titulaire: FRANCE TELECOM, 75015 Paris (FR)
(72) Inventeur: Bennia-Latreche, Karim, 31170 Tournefeuille (FR)
(74) Mandataire: Habasque, Etienne Joel Jean-François

(56) Documents cités:
- EP-A- 0 485 245
- WO-A-98/31157
- US-A- 4 156 119
- US-A- 5 476 388

## Description

L'invention concerne un peigne de dérivation d'un câblage préexistant d'un réseau de transmission d'informations. Plus précisément, l'invention concerne un peigne comportant des connecteurs de dérivation équipés de doigts de contact aptes à être insérés dans une réglette de jonction électrique pour connecter le câblage préexistant à un câblage de dérivation, ladite réglette de jonction électrique étant destinée à établir la continuité électrique entre un câblage électrique raccordé en entrée et un câblage électrique raccordé à la sortie,

Les connecteurs de dérivation sont utilisés lors d'opérations de maintenance des réseaux de transmission d'informations. En effet, ils permettent de rediriger des signaux électriques transportés par le câblage électrique raccordé en entrée de la réglette de jonction, ce câblage étant appelé ici câblage électrique d'entrée, vers le câblage de dérivation pendant que des opérations de maintenance sont effectuées sur le câblage électrique raccordé à la sortie de la réglette de jonction. Ainsi, bien que des opérations de maintenance aient lieu sur le câblage électrique raccordé à la sortie de la réglette, les signaux électriques peuvent tout de même être transportés par l'intermédiaire du câblage de dérivation vers leur destinataire. Un bloc multiple à bornes de raccordement à plusieurs positions est décrit par example dans la demande de brevet FR 2 425 739.

Les réglettes de jonction classiquement utilisées dans les réseaux de transmission d'informations tels que les réseaux téléphoniques sont connues sous les termes de « réglettes de Pouillet ». Ces réglettes de Pouillet comportent une première face sur laquelle est raccordé le câblage d'entrée formé ici de seize voies d'entrée, et une deuxième face sur laquelle est raccordé le câblage de sortie formé de seize voies de sortie. Chaque voie d'entrée ou de sortie se compose d'un premier et d'un second conducteurs électriques de transmission d'informations et d'un fil de masse. Une troisième face de la réglette comporte seize connecteurs amovibles de continuité, c'est-à-dire un par voie d'entrée, destinés à établir la continuité électrique entre une voie d'entrée et une voie de sortie particulière.

Lorsque le câblage d'entrée doit être redirigé vers le câblage de dérivation, des opérateurs installent manuellement des connecteurs de dérivation dans la réglette de Pouillet. Ces derniers connecteurs comportent autant de doigts de contact électriques que de conducteurs électriques dans une voie d'entrée. Chaque doigt de contact est adapté pour établir un contact électrique avec un conducteur respectif de la voie d'entrée lorsqu'il est inséré dans la réglette de Pouillet. Le connecteur de dérivation est raccordé à une voie de dérivation. Cette voie de dérivation comporte autant de conducteurs électriques que de doigts de contact dans le connecteur de dérivation, chacun de ces conducteurs étant connecté à un doigt de contact respectif.

Ainsi, lorsque les connecteurs de dérivation sont installés, les doigts de contact de ces derniers établissent un contact électrique avec des conducteurs respectifs d'une voie d'entrée, et les signaux électriques transmis sur cette voie d'entrée sont dirigés sur la voie de dérivation raccordée au connecteur de dérivation. Lorsque plusieurs connecteurs de dérivation sont utilisés, l'ensemble des voies de dérivation raccordées à ces connecteurs forme le câblage de dérivation.

Lorsque l'ensemble des voies d'entrée d'une réglette de Pouillet doit être dirigé vers des voies de dérivation, l'opérateur redirige, l'une après l'autre, les voies d'entrée vers les voies de dérivation en insérant l'un après l'autre des connecteurs de dérivation dans la réglette de Pouillet. Cette opération est longue et fastidieuse.

L'invention vise à remédier à cet inconvénient en proposant un dispositif pour rediriger plus rapidement plusieurs voies d'entrée d'une réglette de Pouillet vers des voies de dérivation.

Elle a donc pour objet un peigne de dérivation tel que défini plus haut, caractérisé en ce qu'il comporte au moins deux connecteurs de dérivation solidaires d'une seule et même plaque de fixation et des moyens de préhension de cette plaque de fixation.

Le peigne de dérivation décrit ci-dessus permet de manipuler plusieurs connecteurs de dérivation simultanément. Ainsi, au lieu d'effectuer les opérations d'installation des connecteurs de dérivation l'un après l'autre, il est possible de les installer simultanément en une seule opération. L'opération de redirection des voies du câblage d'entrée de la réglette de jonction vers celles du câblage de dérivation est donc réalisable beaucoup plus rapidement.

Suivant d'autres caractéristiques d'un peigne de dérivation conforme à l'invention :
- un seul des connecteurs de dérivation solidaire de la plaque de fixation comporte une borne de connexion à un potentiel de référence du câblage préexistant, ce potentiel de référence formant alors une masse commune pour le câblage de dérivation ;
- seuls deux des connecteurs de dérivation comportant chacun une borne de connexion à un potentiel de référence, ce potentiel de référence formant alors un potentiel de référence commun pour le câblage de dérivation ;
- les deux connecteurs de dérivation comportant une borne de connexion à un potentiel de référence sont disposés de part et d'autre des connecteurs de dérivation non pourvus d'une borne de connexion à un potentiel de référence ;
- il comporte une prise solidaire de la plaque de fixation destinée à établir la connexion électrique entre le câblage de dérivation et les doigts de contact des connecteurs de dérivation solidaires de la même plaque de fixation ;
- il comporte au moins dix connecteurs de dérivation solidaires de la même plaque de fixation;
- la règle de jonction électrique est une règle de Pouillet ;
- les moyens de préhension comportent une poignée fixée sur la plaque de fixation.

L'invention sera mieux comprise à la lecture de la description qui va suivre, donnée uniquement à titre d'exemple et faite en se référant aux dessins sur lesquels :
- la figure 1 est une illustration schématique d'un réseau de transmission d'informations utilisant une réglette de jonction classique,
- la figure 2 est une vue schématique d'une section d'une réglette de Pouillet, et
- la figure 3 est une vue de côté d'un peigne de dérivation conforme à l'invention.

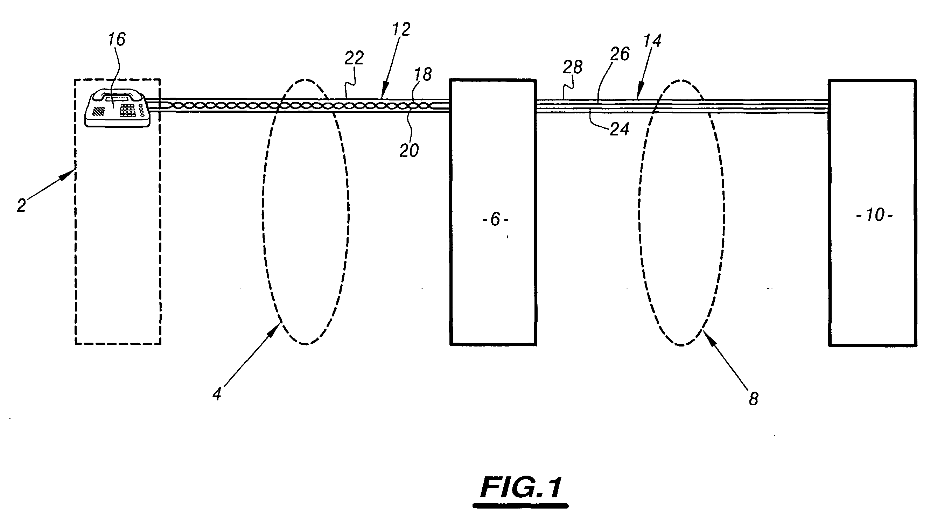

La figure 1 illustre des terminaux de télécommunication 2 raccordés par l'intermédiaire de voies d'entrée 4 à une réglette de jonction 6, elle-même raccordée par l'intermédiaire de voies de sortie 8 à un multiplexeur temporel 10.

Les voies d'entrée 4 et les voies de sortie 8 étant respectivement similaires les unes aux autres, pour simplifier la représentation seule une voie d'entrée 12 et une voie de sortie 14 ont été complètement représentées. De même, les terminaux de télécommunication 2 étant similaires les uns aux autres, seul un terminal de télécommunication 16 est représenté et décrit ici.

Le terminal de télécommunication 16 est raccordé à la voie d'entrée 12. Il est apte à transmettre, sur cette voie d'entrée 12, des signaux électriques. Il s'agit, par exemple, d'un téléphone classique.

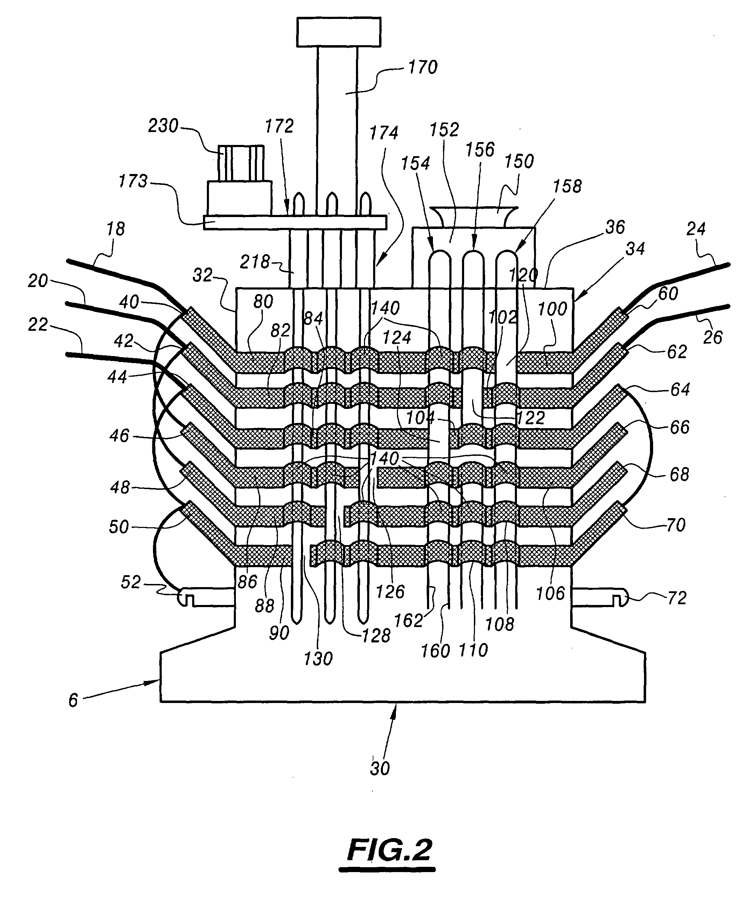

Les voies d'entrée 4 sont toutes similaires à la voie d'entrée 12. Cette dernière se compose de deux conducteurs électriques 18 et 20 de transmission de signaux d'informations. Ces conducteurs électriques 18 et 20 sont enveloppés d'une couche conductrice 22 formant un blindage électromagnétique. Les conducteurs 18 et 20 et le blindage 22 sont raccordés, par leurs extrémités opposées, d'un côté au terminal de télécommunication 16 et de l'autre côté à la réglette de jonction 6. Le détail de ce raccordement sera décrit en regard de la figure 2.

La réglette de jonction 6 est destinée à établir la continuité électrique entre les voies d'entrée et les voies de sortie. Cette réglette est, dans l'exemple de réalisation décrit ici, une réglette de Pouillet.

Les voies de sortie 8 sont toutes similaires à la voie de sortie 14. Cette voie 14 comporte deux conducteurs électriques 24 et 26 destinés à transporter les signaux électriques échangés entre le multiplexeur temporel 10 et le terminal de télécommunication 16. Ces conducteurs 24 et 26 sont également enveloppés par une couche conductrice 28 formant un blindage électromagnétique. Ce blindage électromagnétique 28 est raccordé par l'intermédiaire de la réglette de jonction 6 au blindage électromagnétique 22.

Le multiplexeur 10, également connu sous les termes de « brasseur de télécommunications », est destiné à aiguiller les signaux qui aboutissent jusqu'à lui par les voies de sortie 8, vers de nombreux autres canaux de télécommunication (non représentés) qui sont disponibles à sa sortie.

La figure 2 illustre schématiquement une section de la réglette de Pouillet 6.

La réglette de Pouillet ayant la forme d'un parallélépipède, elle comporte donc une face arrière 30 destinée à être fixée à une paroi (non représentée), deux faces latérales 32 et 34 et une face avant 36.

Les faces latérales 32 et 34 comportent des bornes de connexion. La disposition de ces bornes étant identique sur chacune des faces 32, 34, seule la disposition de celles-ci sur la face latérale 32 sera décrite ici.

Cette face latérale 32 comporte seize rangées parallèles de bornes de connexion disposées dans le sens de longueur de la réglette 6. Chaque rangée de bornes de connexion comporte six bornes de connexion et une borne de masse. Les bornes de connexion sont destinées à être raccordées à des conducteurs électriques respectifs. Sur la figure 2, seule une rangée de bornes de connexion 40, 42, 44, 46, 48, 50 et 52 est représentée sur la face latérale 32 et seule une rangée de bornes 60, 62, 64, 66, 68, 70 et 72 est représentée sur la face latérale 34. Les rangées de bornes disposées sur les faces 32 et 34 de la réglette de Pouillet sont les unes en face des autres.

Dans le cas particulier décrit ici, les bornes de connexion de la face latérale 32 sont raccordées comme suit :
- la borne 40 est raccordée au conducteur 18 de la voie d'entrée 12 et à la borne 46,
- la borne 42 est raccordée au conducteur 20 de la voie d'entrée 12 et à la borne 48,
- la borne 44 est raccordée au blindage 22 de la voie d'entrée 12 et aux bornes 50 et 52.

L'ensemble des rangées sur cette face latérale 32 sont raccordées de façon similaire à des voies d'entrée respectives.

Les bornes de connexion de la face latérale 34 sont raccordées comme suit :
- la borne 60 est raccordée au conducteur 24 de la voie de sortie, et
- la borne 62 est raccordée au conducteur 26 de la voix de sortie 14.

Chaque borne de connexion de la réglette de Pouillet 6 est prolongée dans un plan transversal, vers l'intérieur de la réglette 6, par une barre de contact parallèle à la face avant 36. Chaque barre de contact comporte une extrémité libre intérieure disposée en vis-à-vis de l'extrémité libre intérieure d'une barre de contact d'une des bornes de connexion située sur la face opposée. Les deux extrémités libres disposées en vis-à-vis sont séparées par un espace d'isolation de largeur constante. Les bornes de connexion 40, 42, 44, 46, 48, 50 sont respectivement associées à des barres de contact 80, 82, 84, 86, 88 et 90. Les bornes de connexion 60, 62, 64, 66, 68, 70 sont respectivement associées à des barres de contact 100, 102, 104, 106, 108, 110.

Les barres de contact 80, 82, 84, 86, 88 et 90 sont respectivement en vis-à-vis des barres de contact 100, 102, 104, 106, 108 et 110, séparées respectivement par des espaces d'isolation 120, 122, 124, 126, 128 et 130. La longueur des barres de contact est choisie de manière à décaler en diagonale, les uns par rapport aux autres, les espaces d'isolation 120, 122, 124, 126, 128 et 130.

Dans la face avant 36 sont formées, dans le sens de la longueur, seize rangées parallèles de six trous (non représentés) d'accès aux espaces d'isolation. Chaque rangée de trous se situe dans un plan passant par des rangées de bornes de connexion situées en vis à vis sur chaque face latérale 32, 34. Chaque trou d'accès permet l'accès à un seul espace d'isolation correspondant sans toucher d'autres barres de contact que celles formant cet espace d'isolation. Pour cela, les barres de contact sont réalisées de manière à ce que seule leur extrémité libre à l'intérieur de la réglette de Pouillet soit accessible à partir des trous d'accès. Ainsi, sur la figure 2, des ponts 140 similaires les uns aux autres sont représentés sur le corps des barres d'accès, ces ponts étant disposés de façon à ménager des voies d'accès vers les extrémités des barres à partir des trous d'accès situés sur la face avant 36. Chaque rangée de trous est destinée à recevoir un connecteur de continuité similaire au connecteur de continuité 150 représenté.

Le connecteur de continuité 150 est destiné à établir la continuité électrique entre trois bornes de connexion disposées sur la face latérale 32 et trois bornes de connexion correspondantes disposées sur la face latérale 34. Pour cela, il comporte un support rigide 152 sur lequel sont fixés trois cavaliers électriques 154, 156, 158 identiques entre eux. Le cavalier 154 comporte deux broches électriques 160 et 162, parallèles l'une à l'autre et connectées électriquement l'une à l'autre. Ces broches 160 et 162 sont respectivement destinées à établir un shunt électrique uniquement entre les extrémités libres respectives de deux barres de contact en vis-à-vis lorsque le connecteur de continuité est en position active, c'est-à-dire inséré dans la réglette de Pouillet. Sur la figure 2, le connecteur 150 est représenté en position active, et la continuité électrique est établie par son intermédiaire entre les bornes 40, 60, les bornes 42, 62 et les bornes 44, 64.

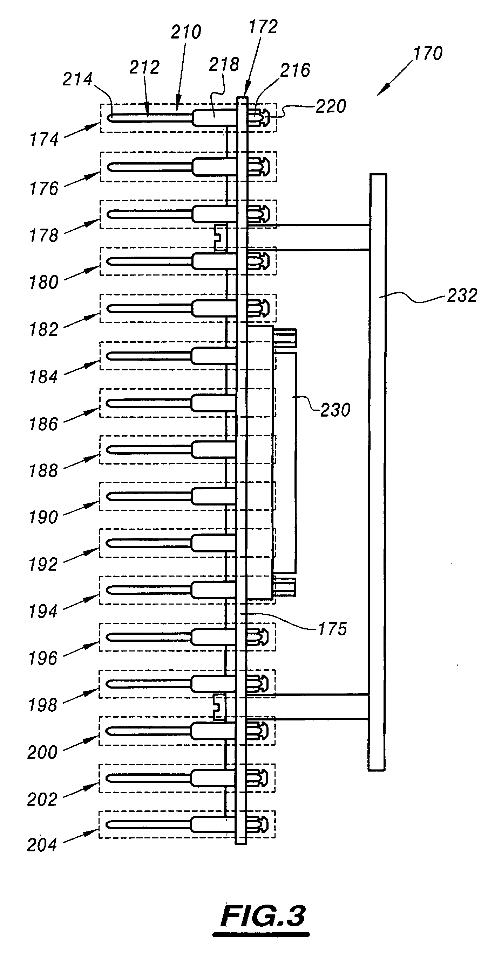

La figure 2 représente également un peigne de dérivation 170 en position active dans la réglette de Pouillet 6. Ce peigne 170 est décrit plus en détail en regard de la figure 3.

La figure 3 représente une vue de côté du peigne de dérivation 170. Ce peigne comporte une plaque de fixation rectangulaire et rigide 172 sur laquelle sont fixées seize rangées 174, 176, 178, 180, 182, 184, 186, 188, 190, 192, 194, 196, 198, 200, 202 et 204 de doigts de contact. La plaque 172 a comme longueur 16,7 cm et comme largeur maximale 3,4 cm. Chaque rangée est destinée à connecter une voie d'entrée à une voie de dérivation correspondante ; en cela, une rangée réalise donc les mêmes fonctions qu'un connecteur de dérivation connu. Les rangées sont disposées parallèlement les unes par rapport aux autres de manière à ce que les doigts de contact formant chacune des rangées puissent être insérés simultanément dans les trous d'accès correspondants de la face avant 36 de la réglette de Pouillet 6. Les rangées sont donc ici parallèles au plus petit côté 173 de la plaque de fixation 172 (figure 2) et sont disposées à intervalles réguliers le long du plus grand côté 175 (figure 3).

Les rangées 174 et 204, dites d'extrémité, sont respectivement disposées à chaque extrémité de la plaque de fixation 172. Les autres rangées 176 à 202, dites intermédiaires, sont, quant à elles, disposées dans l'intervalle situé entre les deux rangées d'extrémité 174 et 204.

Les rangées intermédiaires sont similaires aux rangées d'extrémité à l'exception du fait qu'elles ne comportent que deux doigts de contact au lieu de trois pour les rangées d'extrémité. Le doigt de contact manquant par rapport aux rangées d'extrémité correspond à celui destiné à venir en contact avec le potentiel de référence ou le blindage de la voie d'entrée. Ainsi, l'insertion du peigne 170 dans la réglette de Pouillet est facilitée. Par ailleurs, les doigts de contact avec le blindage des voies d'entrée sont conservés uniquement dans les rangées d'extrémité, car ceux-ci remplissent également une fonction de guidage et de positionnement du peigne 170 par rapport aux trous d'accès de la face 36 de la réglette de Pouillet.

La rangée 174 de doigts de contact étant similaire à la rangée 204, seule la rangée 174 sera décrite ici.

La rangée d'extrémité 174 comporte trois doigts de contact destinés chacun à être insérés dans un trou d'accès de la face avant 36 de manière à établir le contact avec l'extrémité d'une seule barre de contact du côté de la face latérale 32 de la réglette de Pouillet. Les trois doigts de contact de la rangée d'extrémité 174 sont alignés parallèlement au plus petit côté de la plaque de fixation 172. Ces doigts de contact étant identiques entre eux, seul le doigt de contact 210 sera décrit ici. Le doigt de contact 210 est d'une longueur d'au moins 6,1 cm. Ici le doigt de contact mesure 7,1 cm de long et comporte une broche métallique 212 rectiligne munie d'une extrémité libre 214 et d'une extrémité de fixation 216. L'extrémité de fixation 216 est filetée. Le doigt de contact 210 comporte également un contre-écrou 218 et un écrou 220 formant des moyens de fixation du doigt de contact sur la plaque de fixation 172. Le contre-écrou 218 et l'écrou 220 sont destinés à être montés sur l'extrémité 216 de fixation de manière à coincer la plaque de fixation 172 entre ces derniers. A cet effet, des trous de fixation des doigts de contact sont réalisés dans la plaque de fixation 172. Ces trous de fixation sont destinés à recevoir l'extrémité de fixation des doigts de contact.

Une prise électrique 230 comportant trente-quatre fiches femelles, donc autant de fiches femelles que de doigts de contact, est fixée sur la plaque de fixation 172. Cette prise est propre à permettre le raccordement de l'ensemble du câblage de dérivation au peigne 170 en une seule opération. Chacune des fiches femelles de cette prise est connectée à un doigt de contact correspondant par l'intermédiaire d'un circuit imprimé réalisé à cet effet sur la plaque de fixation 172. Chaque fiche femelle de la prise 230 est destinée à être raccordée à un conducteur d'un câblage de dérivation (non représenté). Le potentiel de masse ou de référence du câblage de dérivation est connecté aux fiches femelles correspondantes des rangées 174, 204 d'extrémité.

Une poignée 232, de maintien de la plaque de fixation 172 par un opérateur lors de l'insertion ou de l'extraction des doigts de contact dans la réglette de Pouillet 6, est fixée sur la plaque de fixation 172.

Le fonctionnement du peigne de dérivation va maintenant être décrit en regard des figures 2 et 3.

Lorsque l'ensemble des voies d'entrée 4 raccordées du côté de la face latérale 32 de la réglette de Pouillet 6 doivent être redirigées vers un câblage de dérivation, un opérateur saisit le peigne 170 par la poignée 232 et dispose les doigts de contact des rangées d'extrémité 174 et 204 en vis-à-vis des trous d'accès respectifs formés dans la face avant 36. Ensuite, toujours à l'aide de la poignée 232, l'opérateur exerce une force d'insertion qui est transmise par l'intermédiaire de la plaque de fixation à chacun des doigts de contact, ces derniers s'enfonçant alors simultanément à l'intérieur des trous d'accès. L'opérateur enfonce les doigts de contact à l'intérieur de la réglette de Pouillet jusqu'à ce que les contre-écrous 218 soient en butée sur la face avant 36 de cette réglette. Dans cette position, dite position active, les broches de chacun des doigts de contact établissent un contact électrique avec les extrémités respectives des barres de contact se situant du côté de la face latérale 32. Les mécanismes de redirection des voies d'entrée 4 étant similaires les unes aux autres, seul le mécanisme de redirection de la voie d'entrée 12 vers une voie de dérivation (non représentée) sera décrit ici dans le cas particulier où la voie d'entrée 12 est redirigée par l'intermédiaire de la rangée d'extrémité 174 du peigne 170.

Lorsque le peigne 170 est en position active, les trois doigts de contact de la rangée d'extrémité 174 viennent respectivement en contact uniquement avec les extrémités des barres de contact 86, 88 et 90.

Dans cette situation, la continuité électrique entre le conducteur 18 et une fiche femelle de la prise 230 est établie par l'intermédiaire de la borne de connexion 40, de la borne de connexion 46, de la barre de contact 86, et de l'une des broches de la rangée d'extrémité 174 du peigne 170. De façon similaire, la continuité électrique entre le conducteur 20 est établie avec une autre fiche femelle de la prise 230.

Dans le cas particulier d'une rangée d'extrémité, un troisième circuit électrique raccorde la borne de masse 52 à la borne de connexion 50 qui est prolongée par la barre de contact 90, dont l'extrémité est en contact avec la troisième broche de la rangée d'extrémité 174. Ainsi, les signaux électriques transportés par les conducteurs 18 et 20 sont redirigés par l'intermédiaire des doigts de contact vers des fiches femelles respectives de la prise 230, tandis que le potentiel masse est relié au potentiel de référence du câblage de dérivation via la borne 50, la barre 90 et la broche correspondante.

Ensuite, l'opérateur raccorde les voies de dérivation aux voies d'entrée par l'intermédiaire de la prise 230.

Finalement, l'opérateur retire l'ensemble des connecteurs de continuité tel que le connecteur de continuité 150. Une fois cette dernière étape réalisée, les voies d'entrée ne sont plus raccordées aux voies de sortie mais uniquement aux voies de dérivation.

En variante, de manière à faciliter encore plus l'insertion des doigts de contact du peigne 170 dans la réglette de Pouillet, seule une des deux rangées d'extrémité de doigts de contact comporte un doigt de contact destiné à établir le contact avec une borne de masse commune aux voies d'entrée.

## Revendications

1. Peigne (170) de dérivation d'un câblage préexistant d'un réseau de transmission d'informations, ledit peigne (170) comportant des connecteurs de dérivation équipés de doigts de contact (210) aptes à être insérés dans une réglette (6) de jonction électrique pour connecter le câblage préexistant à un câblage de dérivation, ladite réglette (6) de jonction électrique étant destinée à établir la continuité électrique entre un câblage électrique (4) raccordé en entrée et un câblage électrique (8) raccordé à la sortie,
**caractérisé en ce qu'**il comporte au moins deux connecteurs (174 à 204) de dérivation solidaires d'une seule et même plaque de fixation (170) et des moyens de préhension (232) de cette plaque de fixation (172).

2. Peigne (170) selon la revendication 1, **caractérisé en ce qu'**un seul des connecteurs de dérivation solidaire de la plaque de fixation comporte une borne de connexion à un potentiel de référence du câblage préexistant, ce potentiel de référence formant alors une masse commune pour le câblage de dérivation.

3. Peigne (170) selon la revendication 1, **caractérisé en ce que** seuls deux des connecteurs (174, 204) de dérivation comportent chacun une borne de connexion à un potentiel de référence, ce potentiel de référence formant alors un potentiel de référence commun pour le câblage de dérivation.

4. Peigne (170) selon la revendication 3, **caractérisé en ce que** les deux connecteurs (174, 204) de dérivation comportant une borne de connexion à un potentiel de référence sont disposés de part et d'autre des connecteurs de dérivation (176 à 202) non pourvus d'une borne de connexion à un potentiel de référence.

5. Peigne (170) selon l'une quelconque des revendications précédentes, **caractérisé en ce qu'**il comporte une prise (230) solidaire de la plaque de fixation (172) destinée à établir la connexion électrique entre le câblage de dérivation et les doigts de contact des connecteurs de dérivation solidaires de la même plaque de fixation.

6. Peigne (170) selon l'une quelconque des revendications précédentes, **caractérisé en ce qu'**il comporte au moins dix connecteurs (174 à 204) de dérivation solidaires de la même plaque de fixation (172).

7. Peigne (170) selon l'une quelconque des revendications précédentes, **caractérisé en ce que** la règle (6) de jonction électrique est une règle de Pouillet.

8. Peigne (170) selon l'une quelconque des revendications précédentes, **caractérisé en ce que** les moyens de préhension comportent une poignée (232) fixée sur la plaque de fixation (172).

9. Procédé de dérivation d'un câblage préexistant d'un réseau de transmission d'informations à l'aide d'un peigne (170) selon l'une quelconque des revendications précédentes, le procédé comportant :
- une étape de connexion d'un câblage de dérivation au peigne de dérivation,
- une étape d'installation du peigne de dérivation (170) dans une réglette de jonction (6).

10. Procédé selon la revendication 9, **caractérisé en ce qu'**il comporte une étape de suppression de l'ensemble des cavaliers de continuité (150) qui était inséré dans la réglette de jonction (6).

## Patentansprüche

1. Kamm (170) zur Abzweigung eines bestehenden Kabels eines Netzes zur Informationsübertragung, wobei der Kamm (170) Abzweigverbinder aufweist, welche mit Kontaktfingern (210) ausgerüstet sind, die dazu geeignet sind, in eine elektrische Verbindungsschiene (6) zum Verbinden des bestehenden Kabels mit einer Abzweigverkabelung eingesteckt zu werden, wobei die elektrische Verbindungsschiene (6) zur Aufrechterhaltung der elektrischen Verbindung zwischen einem am Eingang angeschlossenen elektrischen Kabel (4) und einem am Ausgang angeschlossenen elektrischen Kabel (8) vorgesehen ist,
**dadurch gekennzeichnet, dass** er mindestens zwei fest mit einer einzigen und gleichen Befestigungsplatte (170) verbundene Abzweigverbinder (174 bis 204) und Greifeinrichtungen (232) dieser Befestigungsplatte (172) aufweist.

2. Kamm (170) nach Anspruch 1, **dadurch gekennzeichnet, dass** ein einziger, fest mit der Befestigungsplatte verbundener Abzweigverbinder eine Anschlussklemme an ein Referenzpotential des bestehenden Kabels aufweist, wobei dieses Referenzpotential dann eine gemeinsame Masse für das Abzweigkabel bildet.

3. Kamm (170) nach Anspruch 1, **dadurch gekennzeichnet, dass** zwei einzelne der Abzweigverbinder (174, 204) jeder eine Anschlussklemme an ein Referenzpotential aufweisen, wobei dieses Referenzpotential dann ein gemeinsames Referenzpotential für das Abzweigkabel bildet.

4. Kamm (170) nach Anspruch 3, **dadurch gekennzeichnet, dass** die zwei einzelnen Abzweigverbinder (174, 204), welche eine Anschlussklemme an ein Referenzpotential aufweisen, beiderseits der Abzweigverbinder (176 bis 202) angeordnet sind, die nicht für eine Anschlussklemme an ein Referenzpotential vorgesehen sind.

5. Kamm (170) nach einem der vorhergehenden Ansprüche, **dadurch gekennzeichnet, dass** er einen fest mit der Befestigungsplatte (172) verbundenen Griff (230) aufweist, die zur Herstellung der elektrischen Verbindung zwischen dem Abzweigkabel und den Kontaktfingern der Abzweigverbinder aus einem Stück mit derselben Befestigungsplatte vorgesehen ist.

6. Kamm (170) nach einem der vorhergehenden Ansprüche, **dadurch gekennzeichnet, dass** er mindestens zehn fest mit derselben Befestigungsplatte (172) verbundene Abzweigverbinder (174 bis 204) aufweist.

7. Kamm (170) nach einem der vorhergehenden Ansprüche, **dadurch gekennzeichnet, dass** die elektrische Verbindungsschiene (6) eine Pouillet-Schiene ist.

8. Kamm (170) nach einem der vorhergehenden Ansprüche, **dadurch gekennzeichnet, dass** die Greifeinrichtung einen Handgriff (232) aufweist, welcher auf der Befestigungsplatte (172) befestigt ist.

9. Verfahren zum Abzweigen eines bestehenden Kabels eines Netzes zur Informationsübertragung mittels eines Kamms (170) nach einem der vorhergehenden Ansprüche, wobei das Verfahren folgende Verfahrensschritte aufweist:
- Verbinden eines Abzweigkabels mit dem Abzweigkamm,
- Installieren des Abzweigkamms (170) in einer Verbindungsschiene (6).

10. Verfahren nach Anspruch 9, **dadurch gekennzeichnet, dass** es einen Verfahrensschritt zum Aufheben der Gruppe der Leitungs-Steckbrücken (150) aufweist, welche in die Verbindungsschiene eingesetzt waren.

## Claims

1. Cable harness (170) for branching from pre-existing wiring of a data transmission network, the said harness (1701 comprising branch connectors provided with contact pins (210) for insertion into an electrical junction strip (6) to connect the pre-existing wiring to branch wiring, the said electrical junction strip (6) being intended to establish electrical continuity between electrical wiring (4) connected to the input and electrical wiring (8) connected to the output,
**characterized in that** it comprises at least two branch connectors (174 to 204) integral with a single fixing plate (170), and means (232) enabling this fixing plate (172) to be grasped.

2. Cable harness (170) according to Claim 1, **characterized in that** only one of the branch connectors integral with the fixing plate comprises a terminal for connection to a reference potential of the pre-existing wiring, this reference potential then forming a common earth for the branch wiring.

3. Cable harness (170) according to Claim 1, **characterized in that** each of only two of the branch connectors (174, 204) comprises a terminal for connection to a reference potential of the pre-existing wiring, this reference potential then forming a common reference potential for the branch wiring.

4. Cable harness (170) according to Claim 3, **characterized in that** the two connectors (174, 204), each of which comprises a terminal for connection to a reference potential, are positioned one on each side of the branch connectors (176 to 202) which are not provided with terminals for connection to a reference potential.

5. Cable harness (170) according to any one of the preceding claims, **characterized in that** it comprises an outlet (230), integral with the fixing plate (172), intended to establish the electrical connection between the branch wiring and the contact pins of the branch connectors integral with the same fixing plate.

6. Cable harness (170) according to any one of the preceding claims, **characterized in that** it comprises at least ten branch connectors (174 to 204) integral with the same fixing plate (172).

7. Cable harness (170) according to any one of the preceding claims, **characterized in that** the electrical junction strip (6) is a Pouillet strip.

8. Cable harness (170) according to any one of the preceding claims, **characterized in that** the said grasping means comprise a handle (232) fixed to the fixing plate (172).

9. Method for branching from pre-existing wiring of a data transmission network by means of a cable harness (170) according to any one of the preceding claims, the method comprising:
- a step of connecting branch wiring to the branch harness,
- a step of fitting the branch harness (170) into a junction strip (6).

10. Method according to Claim 9, **characterized in that** it comprises a step of removing all the continuity jumpers (150) which were inserted in the junction strip (6).
